# EUROPÄISCHE PATENTSCHRIFT

(11) **EP 2 325 540 B1**
(45) Veröffentlichungstag und Bekanntmachung des Hinweises auf die Patenterteilung: **27.03.2013**
(21) Anmeldenummer: 10190350.8
(22) Anmeldetag: 08.11.2010
(51) Int. Cl.: F16L 59/20

(54) **Verfahren zur Ausbildung einer Verbindung zwischen zwei Rohren sowie Rohrverbindung**
Method for connecting two tubes and tube connection
Procédé de formation d'un raccordement entre deux tuyaux et raccord de tuyaux

(30) Priorität: 20.11.2009 DE 102009044595
(43) Veröffentlichungstag der Anmeldung: 25.05.2011
(73) Patentinhaber: Aquatherm Besitzgesellschaft mbH & Co. KG, 57439 Attendorn (DE)
(72) Erfinder: Rosenberg, Maik, 57439 Attendorn (DE)
(74) Vertreter: Stoffregen, Hans-Herbert

(56) Entgegenhaltungen:
- EP-A1- 0 240 072
- WO-A1-03/104710
- DE-C1- 3 822 090
- FR-A1- 2 358 614
- US-B1- 6 403 182

## Beschreibung

Die Erfindung bezieht sich auf ein Verfahren zur Ausbildung einer Verbindung zwischen zwei von einer Isolierung umgebenen Rohren mit einer durch Ausrichten deren Stirnflächen der Rohre zueinander gebildeten Stoßstelle, die von einer Abdeckung umschlossen wird, wobei im Bereich einer jeden Isolierung eines jeden Rohres im Abstand zu dessen Stoßstelle eine umlaufende Nut verläuft, die sich in Längsrichtung des Rohres mit quer zu dessen Längsrichtung verlaufendem Nutboden erstreckt, mit den Verfahrensschritten
a) Verbinden der Rohre,
b) Bereitstellen von zwei ersten und zwei zweiten Teilhalbschalen, wobei die ersten und die zweiten Teilhalbschalen jeweils eine Halbschale mit einer Erstreckung bilden, die auf den Abstand zwischen den Nutböden ausgelegt wird, und die Halbschalen zumindest abschnittsweise eine Innenumfangsgeometrie aufweisen, die der halben Außenumfangsgeometrie der Rohre entspricht,
c) Einsetzen einer ersten Teilhalbschale in eine der Nuten und Auflegen auf das die Nut aufweisende Rohr,
d) Einsetzen der anderen ersten Teilhalbschale in die Nut des anderen Rohrs und nach auf die erste Teilhalbschale erfolgter Ausrichtung Auflegen auf das Rohr,
e) Einsetzen einer der zweiten Teilhalbschalen im freien Bereich einer der Nuten und Auflegen auf das entsprechende Rohr,
f) Einsetzen der anderen zweiten Teilhalbschale im freien Bereich der anderen Nut und Auflegen auf das Rohr und
g) Verbinden der Abdeckung mit der Isolierung außerhalb der Halbschalen bei gleichzeitigem Umschließen dieser.

Auch nimmt die Erfindung Bezug auf einen Verbindungsbereich zwischen zwei Rohren, deren Stirnflächen zur Bildung einer Stoßstelle zueinander ausgerichtet sind, wobei die Rohre von einer Isolierung umgeben sind und Stoßstellenbereich von einer Abdeckung umschlossen ist, die mit der Isolierung verbunden ist, wobei die Isolierung eines jeden Rohrs im Abstand zu dessen Stirnfläche eine Nut aufweist oder begrenzt, die zur Stirnfläche hin offen ist, sich in Längsrichtung des Rohrs erstreckt und deren Nutboden quer zur Längsrichtung des Rohrs verläuft, in die Nuten jeweils zu Halbschalen sich ergänzende zwei erste und zwei zweite Teilhalbschalen eingesetzt sind und die Rohre umfangsseitig umschließen, wobei die Abdeckung die Halbschalen vollständig umschließt und außerhalb dieser mit der Isolierung verbunden ist.

Um z. B. werkseitig vorisolierte Faserverbundrohrleitungssysteme, die für Trinkwasser- oder Heizungs-/Kühlleitungsnetze mit Betriebsdrücken bis 20 bar und Betriebstemperaturen bis 90 °C zum Einsatz gelangen, bauseitig zu verbinden, muss der Bereich, in der Rohrenden miteinander verbunden werden, von einer Isolierung umgeben werden. Nach dem Stand der Technik wird hierzu der Stoßstellenbereich von einer Rohrmuffe - auch Schiebemuffe genannt - umgeben, die mit einem Isolierschaum ausgefüllt wird. Zuvor wird die Rohrmuffe mit den aneinander grenzenden Rohren außerhalb der Stoßstelle verschweißt. Zum Einbringen des Isolierschaums ist es sodann erforderlich, dass in die Rohrmuffe ein Loch eingebracht wird, das nach Einfüllen des Schaums zu verschließen ist. Somit sind aufwändige und zeitintensive Arbeiten erforderlich, um Rohre miteinander isolierend zu verbinden.

Der DE-C-44 23 459 ist ein Verfahren zum Anformen einer Einsteckmuffe an einen Rohrleitungsanschluss aus einem Polyethylen-Kunststoff zu entnehmen. Hierzu wird an einem Rohrende eine Einsteckmuffe angeformt, das andere Rohr erwärmt und aufgeweitet und sodann über die Einsteckmuffe geschoben. Anschließend erfolgt eine stoffschlüssige Verbindung.

Ein Metallschaumfügeverfahren ist aus der DE-C-198 54 175 bekannt, um Formkörper zu verbinden.

Der US-A-1,002,932 ist ein ein Heizungsrohr umgebendes Isolierrohr zu entnehmen. Das Heizungsrohr verläuft beabstandet zu dem Isolierrohr und ist im Innern des Isolierrohres auf diesem aufgeständert. Das Isolierrohr besteht aus aneinander gereihten Abschnitten, die sich in ihren Stoßstellen überlappen.

Der AT-B-382 947 ist ein Fernwärmeleitungsrohr zu entnehmen, das aus längsgeteilten Rohrstückhälften besteht, die in Art von Nut und Federn ineinander greifen.

Segmente für Rohre nach der AT-B-374 576 bestehen aus geschäumtem Material, wobei die aneinander und verschwenkbar zueinander verlaufenden Segmente von einem Hüllrohr im Stoßbereich umgeben sind.

Der DE-C-41 22 099 sind Isolierhalbschalen für Rohrleitungen zu entnehmen, die über eine Nut-Feder-Verbindung zusammengesetzt sind.

Ein gattungsbildender Stand der Technik ist der DE-C-38 22 090 zu entnehmen. Um eine dichtende Verbindung zwischen Rohrabschnitten zu ermöglichen, ist es erforderlich, dass in einen Zwischenraum zwischen Schaumstoffhalbschalen und eine entlang dieser und abschnittsweise entlang äußerer Mantelrohre verlaufenden Formschalung ein Zweikomponentenreaktionsgießharz eingehüllt wird. Damit dieses den Zwischenraum im hinreichenden Umfang ausfüllen kann, sind Entlüftungslöcher erforderlich. Nach Aushärten des Harzes wird die Formschalung wieder entfernt.

Die FR-A-2 358 614 bezieht sich auf ein isoliertes Rohr, das ein inneres aus Metall bestehendes Rohr, einen dieses umgebenden isolierenden Schaum und eine Umhüllende aufweist. Von den Enden der Umhüllenden gehen elastische Verbindungen und Hülsen aus, die jeweils eine umlaufende Nut begrenzen, um in diese eine Rohrabdeckung einzubringen.

Der EP-A-0 240 072 ist ein Kunststoffrohr zu entnehmen, das von einer thermischen Isolierung umgeben ist. Im Bereich einer Stoßstelle ist ein im Schnitt trapezförmiger Isolierabschnitt in die isolierende Umhüllende einsetzbar.

Die US-B-6 403 182 beschreibt eine isolierende Manschette, wobei Halbschalen über eine Nut-/Federverbindung zusammensetzbar sind.

Gegenstand der WO-A-03/104710 ist ein Rohrverbindungsformteil, wobei Rohrabschnitte durch einen innenseitig entlang der Rohre verlaufene Nippel abgedichtet werden, der einen radial abragenden Steg aufweist, zwischen denen die zu verbindenden Rohrabschnitte zum Anliegen kommen. Hierdurch bedingt bildet sich außenseitig ein Spalt zwischen den zu verbindenden Rohrabschnitten aus, über den eine Überprüfung der Druckdichtheit erfolgen kann.

Der vorliegenden Erfindung liegt die Aufgabe zu Grunde, ein Verfahren zum Verbinden von Rohren bzw. einen Verbindungsbereich zwischen Rohren derart weiterzubilden, dass mit konstruktiv einfachen Maßnahmen eine hinreichende Isolierung im Stoßstellenbereich gewährleistet ist, ohne dass aufwändige Arbeiten erforderlich sind. Dabei soll die im Bereich der Stoßstelle herzustellende Isolierung auch von ungeübten Personen fehlerfrei herstellbar sein.

Die Aufgabe wird durch ein Verfahren der eingangs genannten Art mit den weiteren Verfahrensschritten gelöst, dass vor dem Einsetzen der Halbschalen um die Stoßstelle zwischen den Rohren ein Ringelement angeordnet wird, das sich nach Einsetzen der Teilhalbschalen in Aussparungen der Teilhalbschalen in deren Stoßbereichen erstreckt.

Insbesondere ist vorgesehen, dass das Ringelement stoffschlüssig im Stoßstellenbereich der Rohre mit diesen verbunden wird.

Der Verfahrensschritt b) kann auch vor dem Verfahrensschritt a) erfolgen. Entsprechend ist es auch nicht erforderlich, dass erst die ersten und dann die zweiten Teilhalbschalen zusammengesetzt werden. Vielmehr besteht auch die Möglichkeit, erst eine erste Teilhalbschale und eine zweite Teilhalbschale in dieselbe Nut einzubringen, um sodann die verbleibenden Teilhalbschalen in die andere Nut einzusetzen. Eine andere Reihenfolge des Einsetzens der Teilhalbschalen in die Nuten ist gleichfalls möglich, ohne dass die erfindungsgemäße Lehre verlassen wird.

Sollte die Isolierung der Rohre die zum Einsetzen der Teilhalbschalen benötigte Nut nicht aufweisen, so ist diese entsprechend vor Verbinden der Rohre herzustellen.

Auslegen der Länge der Halbschalen auf den Abstand zwischen den Nutböden bedeutet dabei, dass die Teilhalbschalen problemlos in die Nuten eingesetzt und in Richtung des Rohres gekippt werden können, um auf diesem zum Liegen zu kommen. Die Länge der Halbschalen kann dem lichten Abstand zwischen den Nutböden bei verbundenen Rohren entsprechen oder geringfügig kleiner sein. Es kann aber auch die Länge der Teilhalbschalen in Bezug auf den lichten Abstand zwischen den Nutböden derart abgestimmt werden, dass die Länge der aus den Teilhalbschalen zusammengesetzten Halbschale 3 mm - 7 mm kürzer als der lichte Abstand zwischen den Nutböden bei zusammengesetzten Rohren ist. Somit würde sich dann, wenn die Teilhalbschalen auf den Nutböden aufsitzen, zwischen den Stirnflächen der Teilhalbschalen ein Spalt zwischen 3 mm bis 7 mm ergeben.

Die Nuttiefe sollte insbesondere zwischen 10 mm und 60 mm liegen.

Aufgrund des erfindungsgemäßen Verfahrens wird mit wenigen Bauelementen eine Isoliermuffe zur Verfügung gestellt, die positionsgenau auf die Stoßstelle ausrichtbar ist und diese in einem Umfang umgibt, dass die gewünschte Wärmeisolierung sichergestellt ist.

Zur Vereinfachung des Verfahrens ist des Weiteren vorgesehen, dass als Abdeckung ein auf eine der Isolierungen geschobenes Abdeckrohr verwendet wird, bevor die Abdeckung, d. h. deren Stirnbereiche mit den Isolierungen verbunden werden. Somit ist eine sichere Abdeckung der Teilhalbschalen und Verbindung mit den Isolierungen der Rohre gegeben, so dass eine hohe Funktionstüchtigkeit gewährleistet ist.

Alternativ kann auch als Abdeckung eine Folie wie Schlauchmantelfolie verwendet werden, die die Halbschalen bis in den Bereich der Rohrisolierungen umgibt, also sich über den Stoßstellenbereich erstreckt.

Die Abdeckung selbst sollte mit den Isolierungen stoffschlüssig, insbesondere durch Schweißen verbunden werden. Andere Verbindungsarten wie Kleben kommen gleichfalls in Frage.

Um eine sichere Verbindung zwischen den Halbschalen bei gleichzeitiger guter Wärmeisolierung zu gewährleisten, sieht die Erfindung vor, dass die Halbschalen in ihren Längsrändern derart ausgebildet werden, dass diese bei die Rohre umschließender und aufeinander liegender Position über eine Nut-Feder-Verbindung ineinander greifen.

Um ein einfaches Zusammensetzen der Teilhalbschalen bei gleichzeitiger sicherer Abdeckung des Stoßstellenbereichs zu gewährleisten, ist nach einer Weiterbildung vorgesehen, dass die Teilhalbschalen in ihren nutabgewandten Stirnflächen derart ausgebildet werden, dass die Teilhalbschalen bei auf den Rohren aufliegender Position im Schrägstoß ineinander übergehen oder aneinander grenzen. Hierzu kann vorgesehen sein, dass die Stirnfläche eine Ebene aufspannt, die zur Längsachse der Teilhalbschale einen Winkel von insbesondere 65° bzw. 115° einschließt.

Unabhängig hiervon sind die Teilhalbschalen derart ausgebildet, dass eine erste Teilhalbschale identisch mit einer zweiten Halbschale ist und entsprechende verbleibende Teilhalbschalen gleichfalls identische Geometrien aufweisen. Ein fehlerhaftes Zusammensetzen der Teilhalbschalen wird hierdurch ausgeschlossen.

Auch wenn die erfindungsgemäße Lehre für jedwede Materialien von Rohren geeignet ist, auch für solche aus Metall, wobei vor Einsetzen der Teilhalbschalen die Stimbereiche miteinander verschweißt sind, ist ein bevorzugter Anwendungsfall für Faserverbundrohre gegeben.

Als Isolierung kann eine solche verwendet werden, die aus einer Innenisolierung wie PUR-Schaum und einem als Außenisolierung bezeichneten Mantelrohr besteht, dass die Innen- und Außenisolierung eines jeden Rohres bis zu einem vorgegebenen Abstand zu dessen Stirnfläche entfernt werden, wobei zur Bildung der Nut die Außenisolierung in Richtung der Stirnfläche über der Innenisolierung vorsteht. Im eigentlichen Sinne wird die Nut von dem Mantelrohr und der Außenfläche des Rohrs, durch das das Fluid strömt, in ihren Seitenwandungen begrenzt. Der Nutboden wird durch die Stirnfläche der Innenisolierung wie dem PUR-Schaum gebildet. Selbstverständlich kann auch eine einschichtige Isolierung benutzt werden, in der eine entsprechende Nut zum Einsetzen der Teilhalbschalen ausgebildet wird, wobei die Nut innenseitig von dem Rohr begrenzt sein sollte.

Ein Verbindungsbereich zwischen zwei Rohren, deren Stirnflächen zur Bildung einer Stoßstelle oder eines Stoßstellenbereichs zueinander ausgerichtet sind, wobei die Rohre von einer Isolierung umgeben sind und Stoßstellenbereich von einer Abdeckung umschlossen ist, die mit der Isolierung der Rohre verbunden ist, wobei die Isolierung eines jeden Rohrs im Abstand zu deren Stirnfläche eine Nut aufweist oder begrenzt, die zur

Stirnfläche hin offen ist, sich in Längsrichtung des Rohrs erstreckt und deren Nutboden quer zur Längsrichtung der Rohre verläuft dergestalt, zeichnet sich dadurch aus, dass in die Nuten jeweils zu Halbschalen sich ergänzende zwei erste und zwei zweite Teilhalbschalen eingesetzt sind und die Rohre umfangsseitig umschließen und dass die Abdeckung die Halbschalen vollständig umschließt und außerhalb dieser mit der Isolierung verbunden ist, zeichnet sich dadurch aus, dass die Stoßstelle zwischen den Rohren von einem Ringelement umgeben ist, das stoffschlüssig mit den Rohren im Bereich ihrer Stirnflächen verbunden ist.

Dabei stoßen die Teilhalbschalen insbesondere im Schrägstoß aufeinander, so dass eine hinreichende Abdeckung der Stoßstelle zwischen den Rohren erfolgt.

Zur sicheren Ausrichtung der Halbschalen zueinander ist vorgesehen, dass die Halbschalen im Bereich ihrer Längsränder über eine Nut-Feder-Verbindung ineinander greifen. Hierdurch ergibt sich eine Art Labyrinth-Dichtung und somit ist eine gute Wärmeisolierung sichergestellt.

Bevorzugterweise besteht die Isolierung aus einer Innenisolierung und einer Außenisolierung wie Mantelrohr, dass die Innen-und Außenisolierung eines jeden Rohres bis zu einem vorgegebenen Abstand zu dessen Stirnfläche entfernt ist, wobei zur Bildung der Nut die Außenisolierung in Richtung der Stirnfläche über der Innenisolierung vorsteht. Eine entsprechende Ausbildung einer Nut erfolgt auch dann, wenn anstelle einer Innen-und einer Außenisolierung eine einzige Isolierung die Rohre umgibt.

Entsprechende Nuten sind üblicherweise werksseitig bei isolierten Rohren hergestellt, um die Rohre endseitig mit Kappen verschließen zu können, die sich bis in die Nuten erstrecken. Sollten entsprechende Nuten jedoch nicht vorhanden sein, müssen diese entsprechend zuvor erfolgter Charakterisierung ausgebildet werden. Dabei werden die Seitenflächen der Nut von der Außenfläche des von dem Fluid durchströmten Rohres und dem Mantelrohr und der Nutboden von der Innenisolierung begrenzt.

Die Rohre selbst können aus einem Kunststoffmaterial wie Faserverbundmaterial oder aus einem metallischen Werkstoff bestehen.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der nachfolgenden Beschreibung einer der Zeichnung zu entnehmenden bevorzugten Ausführungsform.

### Es zeigen:

- Fig. 1: eine Draufsicht auf eine aus zwei Teilhalbschalen zusammengesetzte Halb- schale,
- Fig. 2: die Halbschale gemäß Fig. 1 in Seitenansicht,
- Fig. 3: einen Schnitt durch eine Teilhalbschale gemäß Fig. 1 und 2,
- Fig. 4: zwei zusammengesetzte Rohre mit Isolierung im Längsschnitt,
- Fig. 5: die Rohre gemäß Fig. 4 in Draufsicht mit eingesetzter Teilhalbschale,
- Fig. 6: die Rohre gemäß Fig. 6 mit eingesetzter Teilhalbschale im Längsschnitt,
- Fig. 7: die Rohre gemäß Fig. 5 mit teilweise positionierter zweiter Teilhalbschale,
- Fig. 8: einen Schnitt durch die Darstellung gemäß Fig. 7,
- Fig. 9: die Rohre gemäß Fig. 7 mit zwei eingesetzten Teilhalbschalen,
- Fig. 10: einen Längsschnitt der Rohre gemäß Fig. 9,
- Fig. 11: die Rohre gemäß Fig. 4 bis 10 mit diese umgebenden 4 Halbschalen,
- Fig. 12: die Rohre gemäß Fig. 11 in Schnittdarstellungen,
- Fig. 13: die Rohre gemäß Fig. 11 mit in deren Stoßbereich außenseitig umgebender Abdeckung und
- Fig. 14: die Rohre gemäß Fig. 13 in Schnittdarstellung.

Anhand der Figuren, in denen grundsätzlich für gleiche Elemente gleiche Bezugszeichen verwendet werden, soll die erfindungsgemäße Lehre verdeutlicht werden, mit der zwei Rohre 10, 12 im Stoßstellenbereich 14 von einer baustellenseitig anzuordnenden Isoliermuffe umgeben werden, ohne dass aufwändige Arbeiten erforderlich sind, wobei gleichzeitig die Möglichkeit gegeben ist, dass auch ungeübte Personen die Arbeiten durchführen können.

Die Rohre 10, 12 sind unmittelbar von einer Isolierung 16, 18 umgeben, also die Isolierung 16, 18 geht unmittelbar von den Außenflächen der Rohre 10, 12 aus und ummantelt diese. Im Ausführungsbeispiel besteht die Isolierung 16, 18 aus einem als äußere Isolierung bezeichneten Mantelrohr 20, 22 und einer von diesem umgebenden Schaumeinlage 24, 26, die als innere Isolierung bezeichnet wird. Die Schaumeinlage 24, 26 ist auf die Oberfläche des Rohres 10, 12 aufgebracht wie -gespritzt.

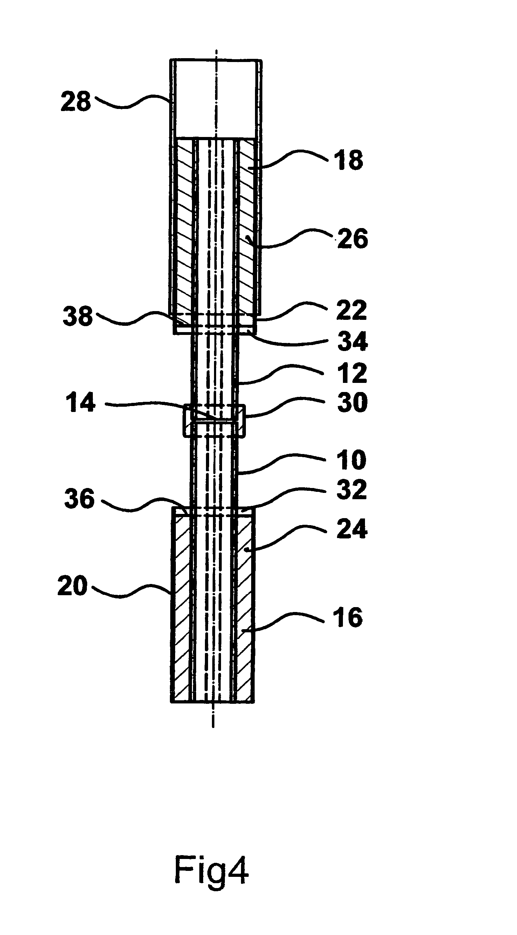

Des Weiteren ist eines der Rohre, im Ausführungsbeispiel das Rohr 12, d. h. dessen Mantelrohr 22, von einem Muffenrohr 28 umgeben, das nach Abdecken des Stoßstellenbereichs 14 in nachstehend beschriebener Weise über den Stoßstellenbereich 14 geschoben und sodann mit den Mantelrohren 20, 22 verbunden wie verschweißt wird. Wie sich aus den Fig. 4 - 10 ergibt, liegen die Rohre 10, 12 im Stoßstellenbereich 14 mit ihren Stirnflächen aufeinander und werden sodann von einem Ringelement 30 umgeben, das als Muffe bezeichnet werden kann. Das Ringelement 30 wird außenseitig mit den Rohren 10, 12 in deren Stirnbereichen bzw. Stoßstellenbereichen stoffschlüssig wie durch Kleben verbunden.

Des Weiteren ist aus den Figuren erkennbar, dass die Rohre 10, 12 im Abstand zur Stoßstelle 14, also zu deren Stirnflächen abisoliert sind, wobei die innere Isolierung 24, 26, also der Schaumstoff, weiter von der Stirnfläche wegisoliert, also entfernt ist als die äußere Isolierung, also das Mantelrohr 20, 22. Hierdurch ergibt sich jeweils eine umlaufende Nut 32, 34, die in Richtung der Stoßstelle 14 offen ist und deren Nutboden 36, 38 senkrecht zur Längsachse des jeweiligen Rohrs 10, 12 verläuft.

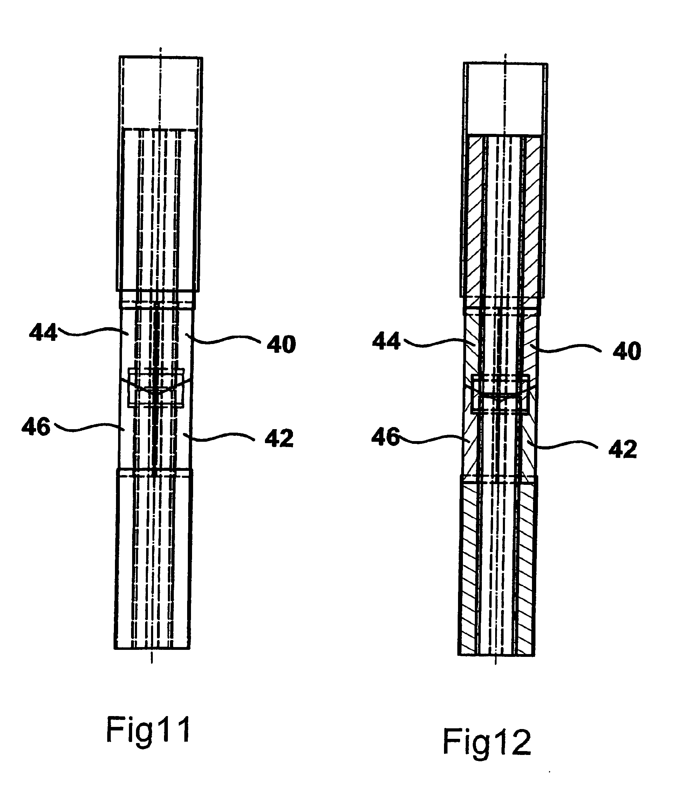

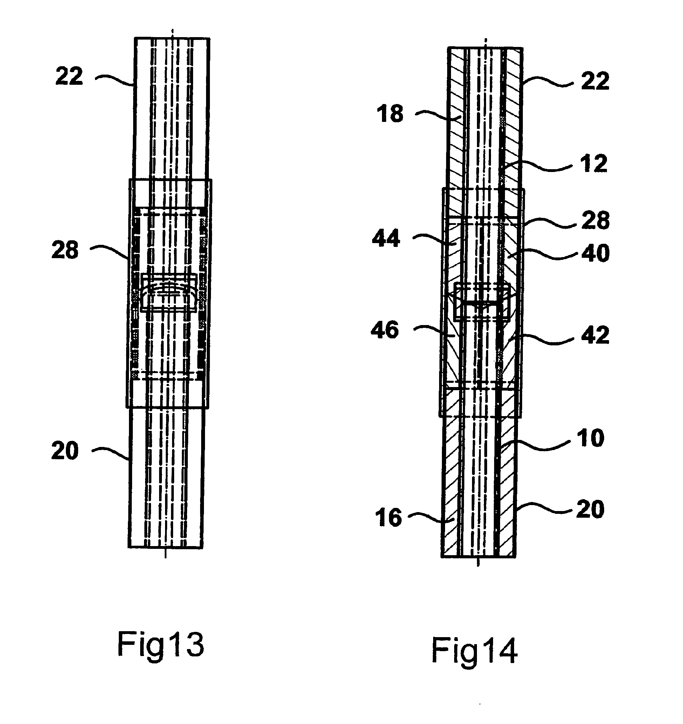

Die Nuten 32, 34 sind dazu bestimmt, um Teilhalbschalen 40, 42, 44, 46 in nachstehend beschriebener Konstruktion aufzunehmen, die zusammengesetzt die Stoßstelle 14 umgeben und sich bis in die Nuten 32, 34 hinein erstrecken, wie die Figuren 11 - 14 verdeutlichen, um sodann das Muffenrohr 28 über die Teilhalbschalen 40, 42, 44, 46 zu schieben und mit den Mantelrohren 20, 22, also der sogenannten äußeren Isolierung, zu verbinden wie zu verschweißen.

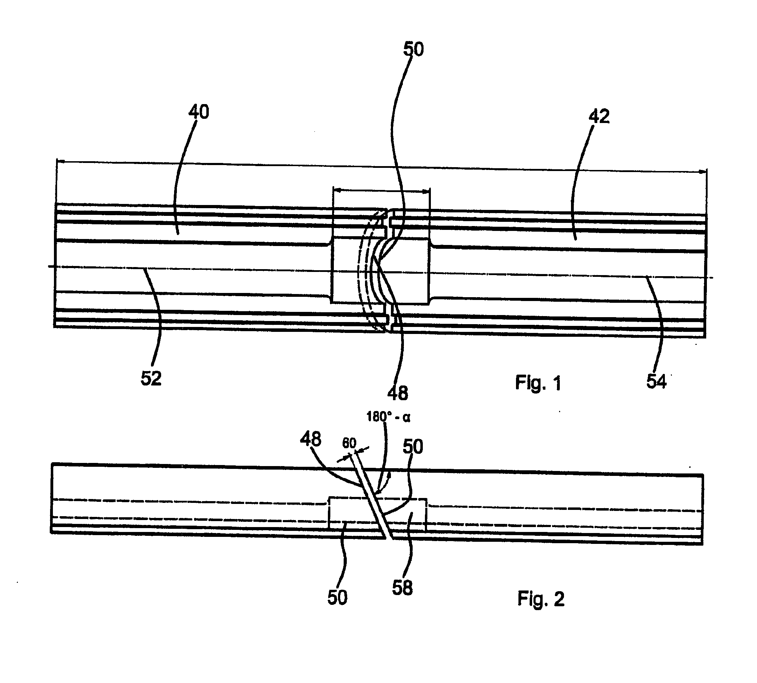

Anhand der Fig. 1 - 3 soll der Aufbau der jeweils eine Halbschale bildenden Teilhalbschalen 40, 42 bzw. 44, 46 verdeutlicht werden. Dies soll anhand der Halbschalen 40, 42 erläutert werden.

Wie sich aus den Fig. 1 - 3 ergibt, weisen die Teilhalbschalen 40, 42 die Form eines Halbhohlzylinderabschnitts auf, wobei die Innengeometrie an die Außengeometrie der Rohre 10, 12 zwischen den Nuten 32, 34 angepasst ist. Die einander zugewandten Stirnflächen 48, 50 verlaufen schräg zueinander, spannen folglich jeweils eine Ebene auf, die zur Längsachse 52, 54 einen Winkel α zwischen 50° und 80° bzw. 130° und 100° einschließen. Im Stirnbereich ist des Weiteren innenseitig jeweils eine Aussparung 56, 58 ausgeformt, die der Außengeometrie des Ringelements 30 entspricht, so dass dieses bei zusammengesetzten und eine Halbschale bildenden Teilhalbschalen 40, 42 formschlüssig von den ineinander übergehenden Aussparungen 56, 58 der Teilhalbschalen 40, 42 aufgenommen ist.

Des Weiteren soll durch die Fig. 1 und 2 verdeutlicht werden, dass die Teilhalbschalen 40, 42 eine Gesamtlänge aufweisen, die kleiner als der lichte Abstand zwischen den Nutböden 36, 38 ist, so dass dann, wenn die Enden einer jeden Teilhalbschale 40, 42 auf die Nutböden 36, 38 aufstoßen, zwischen den Stirnflächen 48, 50 ein Spalt 60 vorliegt, der im Bereich zwischen 3 mm und 7 mm liegen kann, vorzugsweise in etwa 5 mm beträgt. Hierdurch wird sichergestellt, dass ein problemloses Zusammensetzen der Teilhalbschalen 40, 42 zu den Halbschalen erfolgt, wie dies anhand der Fig. 4 - 14 prinzipiell dargestellt ist.

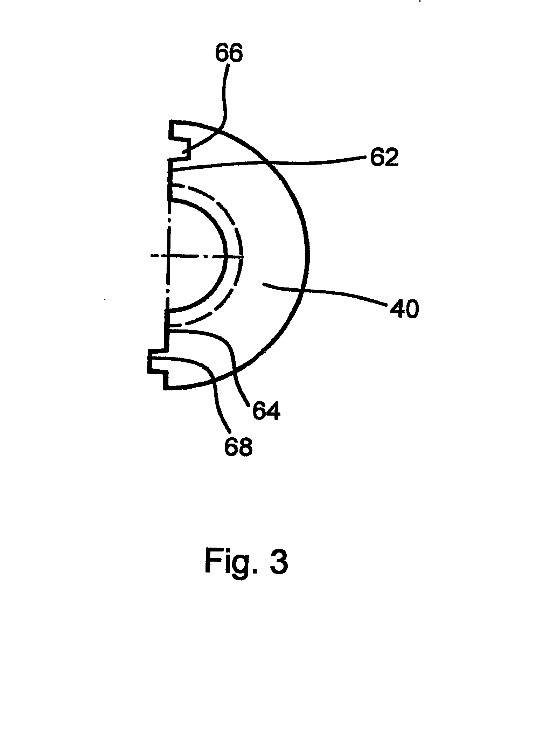

Die Schnittdarstellung gemäß Fig. 3 verdeutlicht, dass die Teilhalbschalen 40, 42 in ihren Längsrändern 62, 64 eine Nut 66 bzw. einen geometrisch angepassten Vorsprung 68 aufweisen, so dass beim Zusammensetzen der eine Halbschale bildenden Teilhalbschalen 40, 42 mit den die andere Halbschale bildenden Teilhalbschalen 44, 46, die eine gleiche Geometrie aufweisen, im Bereich der Längsränder 44, 46 eine Nut-Feder-Verbindung entsteht. Somit erfolgt eine eindeutige Ausrichtung zueinander bei guter Isolierung, da sich eine Labyrinth-Dichtung ergibt.

Die Halbschalen 40, 42, 44, 46 bestehen vorzugsweise aus Polyurethan. Als Materialien für die Mantelrohre 20, 22 kommt Polyethylen und für die Schaumeinlage 16, 18 bevorzugterweise Polyurethan-Schaum in Frage, ohne dass hierdurch die erfindungsgemäße Lehre eingeschränkt wird.

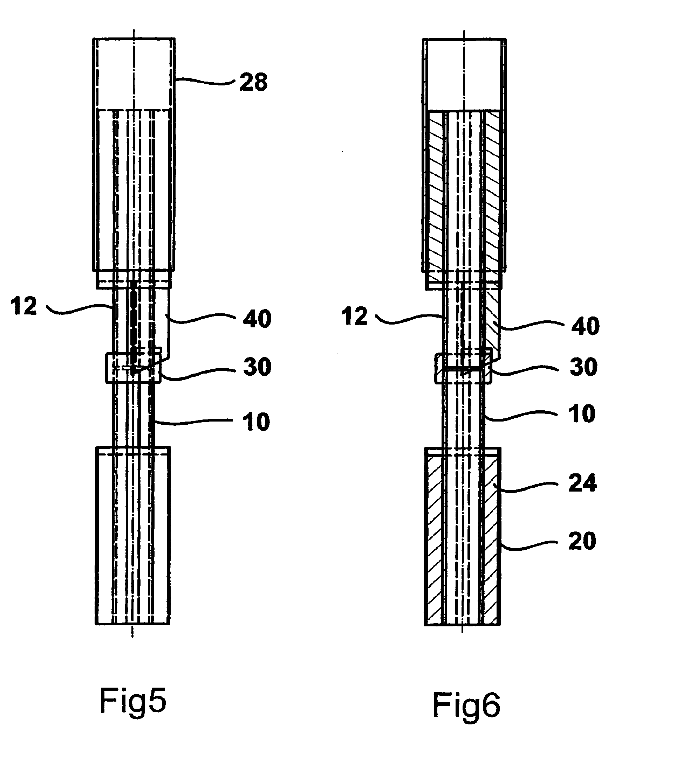

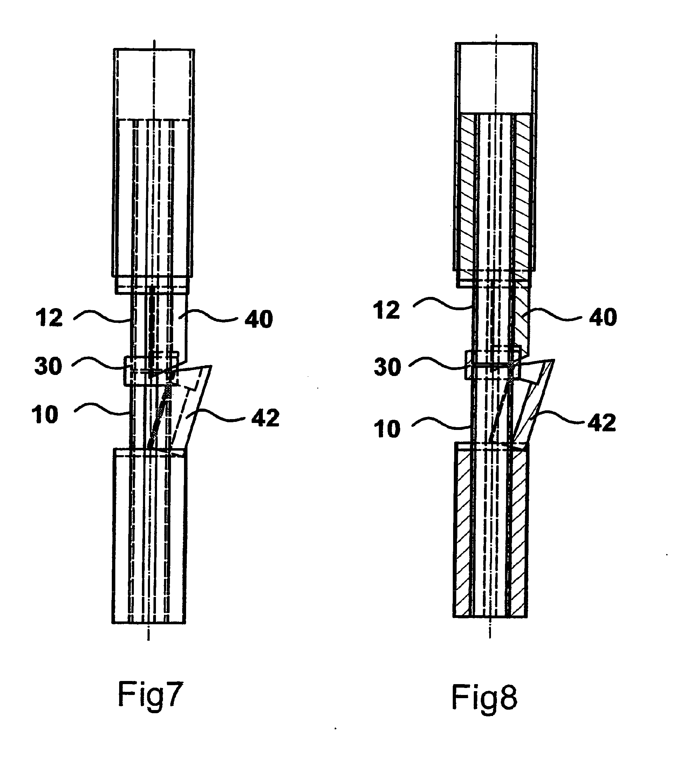

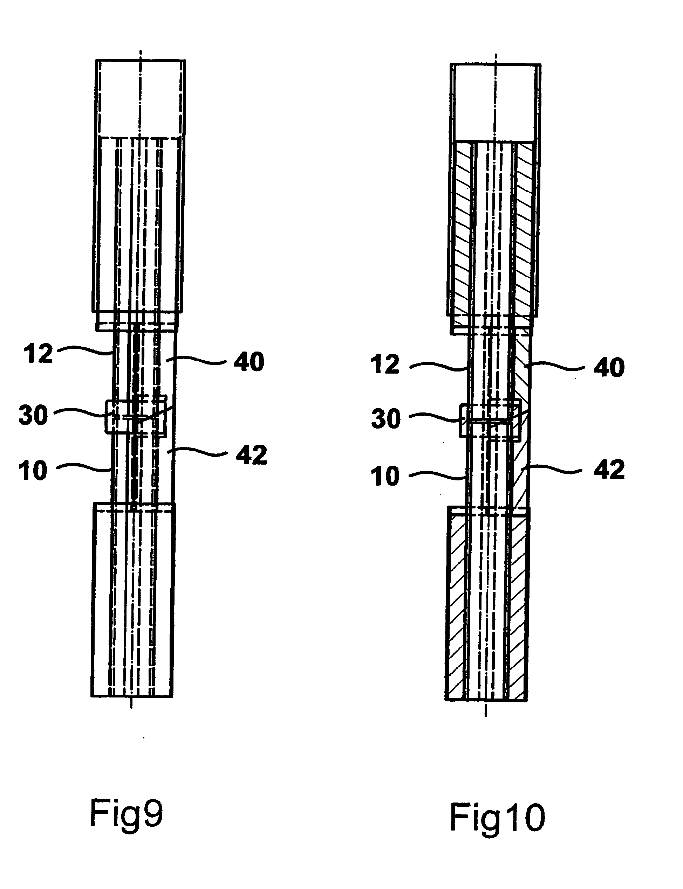

Die Abfolge der Ausbildung der Isoliermuffe im Bereich der Stoßstelle 14 ergibt sich selbsterklärend aus den Fig. 4 - 14. So wird zunächst in eine der Nuten - im Ausführungsbeispiel in die Nut 34 - eine erste Teilhalbschale, im Ausführungsbeispiel die Teilhalbschale 40 eingesetzt und auf das Rohr gesetzt, wie die Fig. 6 verdeutlicht. Sodann wird in die gegenüberliegende Nut 32 und ausgerichtet auf die erste Teilhalbschale 40 die zweite Teilhalbschale 42 eingesetzt (Fig. 7, 8) und auf das Rohr 10 und das Ringelement 30 gelegt (Fig. 9, 10).

Entsprechend werden die verbleibenden Teilhalbschalen 44, 46 in die Nuten 32, 34 eingebracht und auf die Rohre 10, 12 gelegt (Fig. 11, 12). Sodann wird erwähntermaßen das zuvor auf das Rohr 12, d. h. dessen Mantelrohr 22 geschobene Muffenrohr 28 über die aus den Teilhalbschalen 40, 42, 44, 46 zusammengesetzten Halbschalen geschoben und anschließend außerhalb dieser mit den Mantelrohren 20, 22 verbunden wie verschweißt.

Ist die erfindungsgemäße Lehre anhand von Kunststoffrohren 10, 12 erläutert worden, so gilt Entsprechendes auch für Rohre aus anderen Materialien wie aus Metall. In diesem Fall ist es - wie im Übrigen auch bei Kunststoffrohren - nicht zwingend erforderlich, dass ein Ringelement 30 benutzt wird. Vielmehr können die Stirnflächen unmittelbar miteinander verschweißt werden. Ein sich etwaig ausbildender Wulst wird sodann von einer entsprechend ausgebildeten Aussparung im Bereich der Stirnflächen der Teilhalbschalen aufgenommen.

## Patentansprüche

1. Verfahren zur Ausbildung einer Verbindung zwischen zwei von einer Isolierung (16, 18) umgebenen Rohren (10, 12) mit einer durch Ausrichten deren Stirnflächen der Rohre zueinander gebildeten Stoßstelle (14), die von einer Abdeckung (28) umschlossen wird, wobei im Bereich einer jeden Isolierung eines jeden Rohres im Abstand zu dessen Stoßstelle eine umlaufende Nut (32, 34) verläuft, die sich in Längsrichtung (52, 54) des Rohres mit quer zu dessen Längsrichtung verlaufendem Nutboden (36, 38) erstreckt, mit den Verfahrensschritten
a) Verbinden der Rohre (10, 12),
b) Bereitstellen von zwei ersten und zwei zweiten Teilhalbschalen (40, 42, 44, 46), wobei die ersten und die zweiten Teilhalbschalen jeweils eine Halbschale mit einer Erstreckung bilden, die auf den Abstand zwischen den Nutböden (36, 38) ausgelegt wird, und die Halbschalen zumindest abschnittsweise eine Innenumfangsgeometrie aufweisen, die der halben Außenumfangsgeometrie der Rohre (10, 12) entspricht,
c) Einsetzen einer ersten Teilhalbschale (40, 44) in eine der Nuten (34) und Auflegen auf das die Nut aufweisende Rohr (12),
d) Einsetzen der anderen ersten Teilhalbschale (42) in die Nut (32) des anderen Rohrs (10) und nach auf die erste Teilhalbschale erfolgter Ausrichtung Auflegen auf das Rohr,
e) Einsetzen einer der zweiten Teilhalbschalen (44) im freien Bereich einer der Nuten (34) und Auflegen auf das entsprechende Rohr (12),
f) Einsetzen der anderen zweiten Teilhalbschale (46) im freien Bereich der anderen Nut (32) und Auflegen auf das Rohr (10) und
g) Verbinden der Abdeckung (28) mit der Isolierung (16, 18) außerhalb der Halbschalen bei gleichzeitigem Umschließen dieser,
**dadurch gekennzeichnet,**
**dass** vor dem Einsetzen der Halbschalen (40, 42, 44, 46) um die Stoßstelle zwischen den Rohren (10, 12) ein Ringelement (30) angeordnet wird, das sich nach Einsetzen der Teilhalbschalen in Aussparungen der Teilhalbschalen (40, 42, 44, 46) in deren Stoßbereichen erstreckt.

2. Verfahren nach Anspruch 1,
**dadurch gekennzeichnet,**
**dass** das Ringelement (30) stoffschlüssig im Stoßstellenbereich der Rohre (10, 12) mit diesen verbunden wird.

3. Verfahren nach Anspruch 1,
**dadurch gekennzeichnet,**
**dass** als Abdeckung (28) ein vor Verbinden der Rohre (10, 12) auf eines dieser geschobenes Abdeckrohr verwendet wird, wobei zumindest jeweils einer dessen Stirnbereiche mit der Isolierung (16, 18) einer der Rohre insbesondere stoffschlüssig wie durch Schweißen verbunden wird.

4. Verfahren nach Anspruch 1,
**dadurch gekennzeichnet,**
**dass** als Abdeckung (28) eine Folie wie Schlauchmantelfolie verwendet wird.

5. Verfahren nach zumindest einem der vorhergehenden Ansprüche,
**dadurch gekennzeichnet,**
**dass** die Halbschalen in ihren Längsrändern (62, 64) derart ausgebildet werden, dass diese bei die Rohre (10, 12) umschließender und aufeinander liegender Position über eine Nut-Feder-Verbindung (66, 68) ineinander greifen.

6. Verfahren nach zumindest einem der vorhergehenden Ansprüche,
**dadurch gekennzeichnet,**
**dass** die Teilhalbschalen (40, 42, 44, 46) in ihren nutabgewandten Stirnflächen derart ausgebildet werden, dass die Teilhalbschalen bei auf den Rohren (10, 12) aufliegender Position im Schrägstoß ineinander übergehen oder aneinander grenzen

7. Verfahren nach zumindest einem der vorhergehenden Ansprüche,
**dadurch gekennzeichnet,**
**dass** als Isolierung (16, 18) eine solche verwendet wird, die aus einer Innenisolierung (24, 26), vorzugsweise aus Polyurethan-Schaum, und einer Außenisolierung, (20, 22) vorzugsweise in Form eines Mantelrohrs, insbesondere aus Polyethylen, besteht, und/oder dass als Rohre (10, 12) solche verwendet werden, die aus einem Kunststoffmaterial wie Faserverbundmaterial oder aus einem metallischen Werkstoff bestehen.

8. Verfahren nach zumindest einem der vorhergehenden Ansprüche,
**dadurch gekennzeichnet,**
**dass** die Innen- und Außenisolierungen (20, 22, 24, 26) eines jeden Rohrs (10, 12) bis zu einem vorgegebenen Abstand zu dessen Stirnfläche entfernt werden, wobei zur Bildung der Nut (32, 34) die Außenisolierung in Richtung der Stirnfläche über der Innenisolierung vorsteht.

9. Verbindungsbereich zwischen zwei Rohren (10, 12), deren Stirnflächen zur Bildung einer Stoßstelle (14) zueinander ausgerichtet sind, wobei die Rohre von einer Isolierung (16, 18, 20, 22) umgeben sind und Stoßstellenbereich von einer Abdeckung (28) umschlossen ist, die mit der Isolierung verbunden ist, wobei die Isolierung (16, 18, 20, 22) eines jeden Rohrs (10, 12) im Abstand zu dessen Stirnfläche eine Nut (32, 34) aufweist oder begrenzt, die zur Stirnfläche hin offen ist, sich in Längsrichtung des Rohrs erstreckt und deren Nutboden (36, 38) quer zur Längsrichtung des Rohrs verläuft, in die Nuten jeweils zu Halbschalen sich ergänzende zwei erste und zwei zweite Teilhalbschalen (40, 42, 44, 46) eingesetzt sind und die Rohre umfangsseitig umschließen, wobei die Abdeckung (28) die Halbschalen vollständig umschließt und außerhalb dieser mit der Isolierung (16, 18, 20, 22) verbunden ist,
**dadurch gekennzeichnet,**
**dass** die Stoßstelle (14) zwischen den Rohren (10, 12) von einem Ringelement (30) umgeben ist, das stoffschlüssig mit den Rohren im Bereich ihrer Stirnflächen verbunden ist.

10. Verbindungselement nach Anspruch 9,
**dadurch gekennzeichnet,**
**dass** die Teilhalbschalen (40, 42, 44, 46) im Bereich der Stoßstelle (14) im Schrägstoß ineinander übergehen.

11. Verbindungselement nach Anspruch 9 oder 10,
**dadurch gekennzeichnet,**
**dass** die Halbschalen im Bereich ihrer Längsränder (62, 64) über eine Nut-Feder-Verbindung (66, 68) ineinander greifen.

12. Verbindungselement nach einem der Ansprüche 9 bis 11,
**dadurch gekennzeichnet,**
**dass** das Ringelement (30) innerhalb von stoßseitig verlaufenden Aussparungen (56, 58) in den ersten und zweiten Teilhalbschalen (40, 42, 44, 46) verläuft und vorzugsweise von den Teilhalbschalen umgeben ist.

13. Verbindungselement nach einem der Ansprüche 9 bis 12,
**dadurch gekennzeichnet,**
**dass** die Isolierung aus einer Innenisolierung (16, 18), vorzugsweise aus Polyurethan-Schaum, und einer Außenisolierung (20, 22), vorzugsweise in Form eines Mantelrohres aus z. B. Polyethylen, besteht.

14. Verbindungselement nach einem der Ansprüche 9 bis 13,
**dadurch gekennzeichnet,**
**dass** die Innen- und Außenisolierung eines jeden Rohrs (10, 12) bis zu einem vorgegebenen Abstand zu dessen Stirnfläche entfernt ist, wobei zur Bildung der Nut (32, 34) die Außenisolierung in Richtung der Stirnfläche über der Innenisolierung vorsteht.

15. Verbindungselement nach einem der Ansprüche 9 bis 14,
**dadurch gekennzeichnet,**
**dass** das Rohr aus einem Kunststoffmaterial, wie Faserverbundstoff, oder aus einem metallischen Werkstoff besteht.

## Claims

1. Method for providing a connection between two pipes (10, 12) surrounded by an insulation (16, 18) with a joint (14) formed by alignment of the end faces of the pipes relative to one another, said joint being enclosed by a cover (28), where an all-round groove (32, 34) runs in the area of each insulation of each pipe at a distance from its joint and extends in the longitudinal direction (52, 54) of the pipe with the groove bottom (36, 38) running transversely to its longitudinal direction,
with the method steps
a) connecting the pipes (10, 12),
b) providing two first and two second partial half-shells (40, 42, 44, 46), said first and second partial half-shells each forming a half-shell with an extent adapted to the spacing between the groove bottoms (36, 38) and the half-shells having at least in some sections an inner circumference geometry corresponding to half the outer circumference geometry of the pipes (10, 12),
c) inserting a first partial half-shell (40, 44) into one of the grooves (34) and placing it onto the pipe (12) having the groove (12),
d) inserting the other first partial half-shell (42) into the groove (32) of the other pipe (10) and placing it onto the pipe after completing alignment with the first partial half-shell,
e) inserting one of the second partial half-shells (44) in the free area of one of the grooves (34) and placing it onto the corresponding pipe (12),
f) inserting the other second partial half-shell (46) in the free area of the other groove (32) and placing it onto the pipe (10), and
g) connecting the cover (28) to the insulation (16, 18) outside the half-shells while simultaneously enclosing the latter,
**wherein**
before inserting the half-shells (40, 42, 44, 46) around the joint between the pipes (10, 12) a ring element (30) is arranged which, after inserting the partial half-shells, extends into recesses of the partial half-shells (40, 42, 44, 46) in their joint areas.

2. Method according to Claim 1,
**wherein**
the ring element (30) is connected in a material bond to the pipes (10, 12) in the joint area of said pipes.

3. Method according to Claim 1,
**wherein**
a cover pipe slid onto one of the pipes (10, 12) before connection of said pipes is used as the cover (28), where at least one of its end areas is connected to the insulation (16, 18) of one of the pipes, in particular in a material bond, such as by welding.

4. Method according to Claim 1,
**wherein**
a film such as a hose casing film is used as the cover (28).

5. Method according to at least one of the preceding claims,
**wherein**
the half-shells are designed in their longitudinal rims (62, 64) such that they engage with one another by means of a tongue-and-groove connection (66, 68) in the position where they enclose the pipes (10, 12) and are placed one on top of the other.

6. Method according to at least one of the preceding claims,
**wherein**
the partial half-shells (40, 42, 44, 46) are designed in their end faces facing away from the groove such that the partial half-shells merge into or adjoin one another in an inclined joint in their position enclosing the pipes (10, 12).

7. Method according to at least one of the preceding claims,
**wherein**
the insulation (16, 18) used consists of an inner insulation (24, 26), preferably of polyurethane foam, and an outer insulation (20, 22), preferably in the form of a jacketed pipe, in particular of polyethylene, and/or wherein the pipes (10, 12) used consist of a plastic material such as a fiber composite material or of a metallic material.

8. Method according to at least one of the preceding claims,
**wherein**
the inner and outer insulations (20, 22, 24, 26) of each pipe (10, 12) are removed over a given distance from its end face and where the outer insulation projects beyond the inner insulation in the direction of the end face to form the groove (32, 34).

9. Connection area between two pipes (10, 12) whose end faces are aligned with one another to form a joint (14), where the pipes are surrounded by an insulation (16, 18, 20, 22) and the joint area is enclosed by a cover (28) connected to the insulation, where the insulation (16, 18, 20, 22) of each pipe (10, 12) has or limits at a distance from its end face a groove (32, 34) which is open towards the end face, extends in the longitudinal direction of the pipe and whose groove bottom (36, 38) runs transversely to the longitudinal direction of the pipe, where two first and two second partial half-shells (40, 42, 44, 46) complementing one another are inserted into the grooves to form half-shells and enclose the pipes on the circumferential side, where the cover (28) completely encloses the half-shells and is connected outside them to the insulation (16, 18, 20, 22),
**wherein**
the joint (14) between the pipes (10, 12) is surrounded by a ring element (30) connected in a material bond to the pipes in the area of their end faces.

10. Connection element according to Claim 9,
**wherein**
the partial half-shells (40, 42, 44, 46) merge into one another in an inclined joint in the area of the joint (14).

11. Connection element according to Claim 9 or 10,
**wherein**
the half-shells engage with one another in the area of their longitudinal rims (62, 64) by means of a tongue-and-groove connection (66, 68).

12. Connection element according to one of Claims 9 to 11,
**wherein**
the ring element (30) extends inside recesses (56, 58) on the joint side inside the first and second partial half-shells (40, 42, 44, 46) and is preferably surrounded by said partial half-shells.

13. Connection element according to one of Claims 9 to 12,
**wherein**
the insulation consists of an inner insulation (16, 18), preferably of polyurethane foam, and an outer insulation (20, 22), preferably in the form of a jacketed pipe, for example of polyethylene.

14. Connection element according to one of Claims 9 to 13,
**wherein**
the inner and outer insulation of each pipe (10, 12) is removed over a given distance from its end face, where the outer insulation projects beyond the inner insulation in the direction of the end face to form the groove (32, 34).

15. Connection element according to one of Claims 9 to 14,
**wherein**
the pipe consists of a plastic material such as a fiber composite material or of a metallic material.

## Revendications

1. Procédé de formation d'un raccordement entre deux tuyaux (10, 12) entourés par une isolation (16, 18), avec une jonction (14) formée par alignement des surfaces frontales des tuyaux l'une par rapport à l'autre, ladite jonction étant entourée par une enveloppe (28), sachant que, dans le secteur de chaque isolation de chaque tuyau, une rainure circulaire (32, 34) passe à distance de la jonction dudit tuyau et s'étend dans le sens longitudinal (52, 54) du tuyau avec un fond de rainure (36, 38) transversal au sens longitudinal dudit tuyau,
comprenant les étapes de procédé suivantes :
a) raccordement des tuyaux (10, 12),
b) mise en place de deux premières et deux secondes demi-coquilles partielles (40, 42, 44, 46), sachant que les premières et les secondes demi-coquilles partielles forment respectivement une demi-coquille avec une extension, laquelle est conçue par rapport à la distance entre les fonds de rainure (36, 38), et que les demi-coquilles présentent au moins partiellement une géométrie périphérique intérieure qui correspond à la moitié de la géométrie périphérique extérieure des tuyaux (10,12),
c) insertion d'une première demi-coquille partielle (40, 44) dans l'une des rainures (34) et pose sur le tuyau (12) présentant la rainure,
d) insertion de l'autre première demi-coquille partielle (42) dans la rainure (32) de l'autre tuyau (10) puis, après son alignement correct sur la première demi-coquille partielle, pose sur le tuyau,
e) insertion de l'une des secondes demi-coquilles partielles (44) dans la zone libre de l'une des rainures (34) et pose sur le tuyau correspondant (12),
f) insertion de l'autre seconde demi-coquille partielle (46) dans la zone libre de l'autre rainure (32) et pose sur le tuyau (10) et
g) raccordement de l'enveloppe (28) à l'isolation (16, 18) en-dehors des demi-coquilles avec enclavement simultané de ces dernières,
**caractérisé en ce**
**que**, avant l'insertion des demi-coquilles (40, 42, 44, 46) autour de la jonction entre les tuyaux (10, 12), il est disposé un élément annulaire (30), lequel, après l'insertion des demi-coquilles partielles, s'étend dans les évidements des demi-coquilles partielles (40, 42, 44, 46) se trouvant dans leurs zones de jonction.

2. Procédé selon la revendication 1,
**caractérisé en ce**
**que** l'élément annulaire (30) dans le secteur de la jonction des tuyaux (10, 12) est relié à ce dernier par liaison de matière.

3. Procédé selon la revendication 1,
**caractérisé en ce**
**qu'**un tuyau de recouvrement, glissé avant le raccordement des tuyaux (10, 12) sur l'un de ces derniers, est utilisé comme enveloppe (28), sachant qu'au moins respectivement l'une de ses zones frontales est raccordée à l'isolation (16,18) de l'un des tuyaux, en particulier par liaison de matière comme dans le cas d'un soudage.

4. Procédé selon la revendication 1,
**caractérisé en ce**
**qu'**un film, par exemple un film tubulaire, est utilisée comme enveloppe (28).

5. Procédé selon au moins l'une des revendications précédentes, **caractérisé en ce**
**que** les bords longitudinaux (62, 64) des demi-coquilles sont formés de telle sorte que, lorsque ces dernières entourent le tuyau et se superposent, elles s'enclenchent par l'intermédiaire d'un joint rainuré-bouveté (66, 68).

6. Procédé selon au moins l'une des revendications précédentes, **caractérisé en ce**
**que** les surfaces de contact des demi-coquilles partielles (40, 42, 44, 46) opposées aux rainures sont formées de telle sorte que les demi-coquilles partielles en position de pose sur les tuyaux (10, 12) s'enclenchent ou s'aboutent dans un assemblage en angle.

7. Procédé selon au moins l'une des revendications précédentes,
**caractérisé en ce**
**qu'**en tant qu'isolation (16, 18) est utilisé un matériau isolant qui est composée d'une isolation intérieure (24, 26), de préférence en mousse de polyuréthane, et d'une isolation extérieure (20, 22), de préférence sous forme d'un fourreau, en particulier en polyéthylène, et/ou qu'en tant que tuyaux (10,12) sont utilisés des tuyaux qui sont composés d'une matière synthétique, telle qu'une matière composite renforcée par des fibres, ou d'une matière métallique.

8. Procédé selon au moins l'une des revendications précédentes **caractérisé en ce**
**que** les isolations intérieures et extérieures (20, 22, 24, 26) de chaque tuyau (10, 12) sont enlevés sur une distance prédéfinie de la surface de contact de ce tuyau, sachant que, pour la formation de la rainure (32, 34), l'isolation extérieure dépasse l'isolation intérieure dans le sens de la surface de contact.

9. Zone de raccordement entre deux tuyaux (10, 12), dont les surfaces de contact sont alignées l'une par rapport à l'autre pour la formation d'une jonction (14), les tuyaux étant enveloppés par une isolation (16, 18, 20, 22) et le secteur de la jonction étant entouré par une enveloppe (28), laquelle est reliée à l'isolation, l'isolation (16, 18, 20, 22) de chaque tuyau (10,12) présentant ou délimitant une rainure (32, 34) à distance de sa surface de contact, laquelle rainure est ouverte vers la surface de contact, s'étend dans le sens longitudinal du tuyau et dont le fond de rainure (36, 38) s'étend transversalement au sens longitudinal du tuyau, deux premières et deux secondes demi-coquilles partielles (40, 42, 44, 46) se complétant respectivement en demi-coquilles étant insérées dans les rainures et entourant en périphérie les tuyaux, sachant que l'enveloppe (28) entoure complètement les demi-coquilles et est reliée en dehors de ces dernières à l'isolation (16, 18, 20, 22),
**caractérisé en ce**
**que** la jonction (14) entre les tuyaux (10, 12) est entourée par un élément annulaire (30), lequel est relié par liaison de matière aux tuyaux dans le secteur de leur surface de contact.

10. Élément de raccordement selon la revendication 9,
**caractérisé en ce**
**que** les demi-coquilles partielles (40, 42, 44, 46) s'enclenchent dans un assemblage en angle dans le secteur de la jonction (14).

11. Élément de raccordement selon la revendication 9 ou 10,
**caractérisé en ce**
**que** les demi-coquilles s'enclenchent par l'intermédiaire d'un joint rainuré-bouveté (66, 68) dans le secteur de leurs bords longitudinaux (62, 64).

12. Élément de raccordement selon l'une des revendications 9 à 11, **caractérisé en ce**
**que** l'élément annulaire (30) s'étend à l'intérieur des évidements (56, 58) se trouvant dans la zone de jonction des premières et les secondes demi-coquilles partielles (40, 42, 44, 46) et est entouré de préférence par les demi-coquilles partielles.

13. Élément de raccordement selon l'une des revendications 9 à 12, **caractérisé en ce**
**que** l'isolation est composée d'une isolation intérieure (16, 18), de préférence en mousse de polyuréthane, et d'une isolation extérieure (20, 22), de préférence sous forme d'un fourreau en polyéthylène par exemple.

14. Élément de raccordement selon l'une des revendications 9 à 13, **caractérisé en ce**
**que** l'isolation intérieure et extérieure de chaque tuyau (10, 12) est enlevée sur une distance prédéfinie de la surface de contact dudit tuyau, sachant que pour la formation de la rainure (32, 34), l'isolation extérieure dépasse l'isolation intérieure dans le sens de la surface de contact.

15. Élément de raccordement selon l'une des revendications 9 à 14, **caractérisé en ce**
**que** le tuyau est composé d'une matière synthétique, telle qu'une matière composite renforcée par des fibres, ou d'une matière métallique.
